# EUROPÄISCHE PATENTSCHRIFT

(11) **EP 3 894 722 B1**
(45) Veröffentlichungstag und Bekanntmachung des Hinweises auf die Patenterteilung: **15.11.2023**
(21) Anmeldenummer: 19805628.5
(22) Anmeldetag: 15.11.2019
(51) Int. Cl.: F16H 3/00, F16H 3/08, F16H 3/093

(54) **SECHSGANG FRONTQUER-DOPPELKUPPLUNGSGETRIEBE MIT DRITTER VORGELEGEWELLE**
SIX-SPEED FRONT-TRANSVERSE DOUBLE-CLUTCH TRANSMISSION WITH THIRD COUNTER SHAFT
TRANSMISSION FRONTALE TRANSVERSALE À SIX VITESSES À DOUBLE EMBRAYAGE, MUNIE D'UN TROISIÈME ARBRE DE RENVOI

(30) Priorität: 14.12.2018 DE 102018221844
(43) Veröffentlichungstag der Anmeldung: 20.10.2021
(73) Patentinhaber: ZF Friedrichshafen AG, 88046 Friedrichshafen (DE)
(72) Erfinder: BACHMANN, Max, 88048 Friedrichshafen (DE); ROSEMEIER, Thomas, 88074 Meckenbeuren (DE); ROSKE, Michael, 88046 Friedrichshafen (DE); REISCH, Matthias, 88214 Ravensburg (DE); KALTENBACH, Johannes, 88048 Friedrichshafen (DE); BECK, Stefan, 88097 Eriskirch (DE); WECHS, Michael, 88138 Weißensberg (DE); RATTAY, Martin, 88213 Ravensburg (DE); PAWLAKOWITSCH, Juri, 88079 Kressbronn (DE); KUTTER, Fabian, 88079 Kressbronn (DE)
(74) Vertreter: ZF Friedrichshafen AG
(86) Internationale Anmeldenummer: PCT/EP2019/081421
(87) Internationale Veröffentlichungsnummer: WO 2020/120066

(56) Entgegenhaltungen:
- EP-A2- 1 826 457
- DE-A1- 10 225 331
- DE-A1-102014 118 213
- DE-A1-102014 213 459
- DE-A1-102017 102 348

## Beschreibung

Die Erfindung betrifft ein Getriebe nach dem Oberbegriff von Anspruch 1 und ein Verfahren nach dem unabhängigen Verfahrensanspruch.

Die Druckschrift DE 10 2012 213 450 A1 offenbart ein Doppelkupplungsgetriebe mit einer dritten Vorgelegewelle. Diese weist ein Losrad, ein Festrad und ein Schaltelement auf. Über das Schaltelement ist das Losrad drehfest mit der Vorgelegewelle verbindbar. Das Festrad und das Losrad sind jeweils drehwirksam mit einer der beiden anderen Vorgelegewellen drehwirksam verbindbar oder verbunden. Durch Schließen des Schaltelements der dritten Vorgelegewelle lässt sich so eine drehwirksame Verbindung zwischen den beiden weiteren Vorgelegewellen herstellen.

Aus dem Stand der Technik sind darüber hinaus Doppelkupplungsgetriebe mit zwei Vorgelegewellen bekannt, mit denen sich sechs Vorwärtsgänge realisieren lassen. Die DE 10 2014 213 459 A1 und die DE 10 2017 102 348 A1 betreffen Doppelkupplungsgetriebe für ein Kraftfahrzeug.

Der Erfindung liegt die Aufgabe zugrunde, ein Getriebe verfügbar zu machen, das die den aus dem Stand der Technik bekannten Lösungen innewohnenden Nachteile nicht aufweist. Insbesondere soll der Bauraumbedarf des Getriebes in axialer Richtung verringert werden.

Diese Aufgabe wird gelöst durch ein Getriebe nach Anspruch 1 und ein Verfahren nach dem unabhängigen Verfahrensanspruch. Bevorzugte Weiterbildungen sind in den Unteransprüchen enthalten und ergeben sich aus den in den Figuren dargestellten Ausführungsbeispielen.

Das Getriebe weist mindestens sechs Wellen, bevorzugt genau sechs Wellen auf - eine erste Welle, eine zweite Welle, eine dritte Welle, eine vierte Welle, eine fünfte Welle und eine sechste Welle. Eine Welle ist ein Maschinenelement zum Weiterleiten von Drehbewegungen und Drehmomenten zwischen mit ihr verbundenen, das heißt mit rotierenden Teilen.

Die erste Welle, die zweite Welle und die dritte Welle sind bevorzugt koaxial zueinander angeordnet. Dies bedeutet, dass sie identische Drehachsen haben. Achsversetzt dazu sind bevorzugt die vierte Welle und die fünfte Welle angeordnet. Weiterhin sind die vierte Welle und die fünfte Welle bevorzugt achsversetzt zueinander angeordnet. Die Drehachse der ersten Welle, der zweiten Welle und der dritten Welle, die Drehachse der vierten Welle und die Drehachsen der fünften Welle sind also voneinander verschieden und verlaufen paarweise zueinander beabstandet. Weiterhin ist die sechste Welle bevorzugt achsversetzt zu der ersten Welle, der zweiten Welle und der dritten Welle, zu der vierten Welle und zu der fünften Welle angeordnet. Eine Drehachse der sechsten Welle verläuft also zu der Drehachse der ersten Welle, der zweiten Welle und der dritten Welle, zu der Drehachse der vierten Welle und zu der Drehachse der fünften Welle jeweils beabstandet und ist von diesen verschieden.

Die zweite Welle kann als Hohlwelle ausgestaltet sein, durch welche die dritte Welle hindurch verläuft. Alternativ kann die dritte Welle als Hohlwelle ausgestaltet sein, durch welche die zweite Welle hindurch verläuft.

Die erste Welle ist bevorzugt drehwirksam oder drehfest mit einem Verbrennungsmotor bzw. einer Kurbelwelle des Verbrennungsmotors verbunden. Entsprechend eignet sich das Getriebe zur Verwendung in einem Kraftfahrzeug, insbesondere in Front-Quer-Anordnung.

Zwei Komponenten, z.B. zwei Wellen oder ein Zahnrad und eine Welle, sind drehfest miteinander verbunden, wenn zwischen den Komponenten kein rotatorischer Freiheitsgrad besteht. Drehfest verbundene Komponenten sind also relativ zueinander nicht verdrehbar.

Bei der vierten Welle, der fünften Welle und der sechsten Welle handelt es sich um Vorgelegewellen. Eine Vorgelegewelle ist eine Welle, die zu einer Antriebswelle - der zweiten Welle bzw. der dritten Welle - und einem Abtrieb achsversetzt angeordnet ist, und über die ein von der Antriebswelle zu dem Abtrieb verlaufender Drehmomentfluss mindestens eines Gangs geleitet wird.

Darüber hinaus weist das Getriebe mindestens neun, bevorzugt genau neun Schaltelemente auf - ein erstes Schaltelement, ein zweites Schaltelement, ein drittes Schaltelement, ein viertes Schaltelement, ein fünftes Schaltelement, ein sechstes Schaltelement, ein siebtes Schaltelement, ein achtes Schaltelement und ein neuntes Schaltelement. Ein Schaltelement ist ausgebildet, zwei relativ zueinander verdrehbare Komponenten, z.B. ein Zahnrad und eine Welle oder zwei Wellen, drehfest miteinander zu verbinden. Das Schaltelement besitzt einen geschlossenen und einen offenen Zustand. Im offenen Zustand sind die Komponenten relativ zueinander verdrehbar. Befindet sich das Schaltelement im geschlossenen Zustand, verwendet es die Komponenten drehfest miteinander. Das Schaltelement ist selektiv betätigbar. Dies bedeutet, dass das Schaltelement zu einem beliebigen Zeitpunkt durch Betätigung von dem offenen Zustand in den geschlossenen Zustand und von dem geschlossenen Zustand in den offenen Zustand überführbar ist.

Über das erste Schaltelement sind die erste Welle und die dritte Welle drehfest miteinander verbindbar, über das zweite Schaltelement die erste Welle und die zweite Welle. Das erste Schaltelement und das zweite Schaltelement sind bevorzugt als reibschlüssige Schaltelemente ausgestaltet, um als Anfahrkupplungen zu dienen. Insbesondere können das erste Schaltelement und das zweite Schaltelement in einem gemeinsamen Gehäuse integriert sein. Das Gehäuse, das erste Schaltelement und das zweite Schaltelement bilden eine Doppelkupplung.

Über das dritte Schaltelement sind die zweite Welle und die vierte Welle drehwirksam, bevorzugt gegensinnig, miteinander verbindbar. Ebenso sind die dritte Welle und die vierte Welle über das fünfte Schaltelement drehwirksam, bevorzugt gegensinnig, miteinander verbindbar. Die zweite Welle und die fünfte Welle sind über das sechste Schaltelement drehwirksam, bevorzugt gegensinnig, miteinander verbindbar. Über das siebtes Schaltelement sind die vierte Welle und die fünfte Welle drehwirksam, bevorzugt gegensinnig, miteinander verbindbar. Schließlich sind die dritte Welle und die fünfte Welle über das achte Schaltelement drehwirksam, bevorzugt gegensinnig, miteinander verbindbar.

Zwei Komponenten sind drehwirksam miteinander verbunden, wenn sie mit einem Getriebefreiheitsgrad von 1 gekoppelt sind. Eine allgemeine Definition des Begriffs Getriebefreiheitsgrad, auch Getriebelaufgrad genannt, findet sich im "Dubbel" (Karl-Heinrich Grothe, Jörg Feldhusen: "Dubbel". 22. Auflage, 2007). Zwischen den Drehzahlen der drehwirksam miteinander verbundenen Komponenten besteht ein umkehrbar eindeutiger Zusammenhang. Durch eine Drehzahl einer ersten Komponente ist dabei eine Drehzahl einer zweiten Komponente eindeutig festgelegt. Umgekehrt ist durch die Drehzahl der zweiten Komponente die Drehzahl der ersten Komponente eindeutig festgelegt. Insbesondere kann zwischen den Komponenten ein linearer Drehzahlzusammenhang bestehen. Ein Übersetzungsverhältnis zwischen den beiden Komponenten kann dabei größer oder kleiner als 1 sein.

Eine gleichsinnige Kopplung zweier Komponenten liegt vor, wenn die Drehrichtung beider Komponenten übereinstimmt. Drehen die Komponenten sich in entgegengesetzte Richtung, sind sie gegensinnig gekoppelt.

Sind eine erste Komponente und eine zweite Komponente über ein Schaltelement drehwirksam miteinander verbindbar, so besteht eine drehwirksame Verbindung zwischen der ersten Komponente und einer dritten Komponente und/oder eine drehwirksame Verbindung zwischen der zweiten Komponente und einer vierten Komponente. Über das Schaltelement sind die dritte Komponente und die vierte Komponente drehfest miteinander verbindbar, die erste Komponente und die vierte Komponente drehfest miteinander verbindbar, oder die zweite Komponente und die dritte Komponente drehfest miteinander verbindbar.

Schließlich weist das Getriebe einen Abtrieb auf. Bei dem Abtrieb kann es sich etwa um eine Ausgangswelle mit einem Festrad oder um ein Achsdifferential handeln.

Ein Festrad der vierten Welle ist drehwirksam mit dem Abtrieb verbunden. Ebenso ist ein Festrad der fünften Welle drehwirksam mit dem Abtrieb verbunden.

Ein Festrad einer Welle ist ein Zahnrad, das drehfest auf der Welle fixiert ist. Bevorzugt ist das Zahnrad starr auf der Welle fixiert, sodass keinerlei Relativbewegungen zwischen der Welle und dem Festrad möglich sind und das Festrad mit der Welle um eine gemeinsame Drehachse rotiert.

Erfindungsgemäß kämmen ein erstes Zahnrad der sechsten Welle und ein Festrad der zweiten Welle sowie ein zweites Zahnrad der sechsten Welle und ein Festrad der dritten Welle miteinander. Bei dem ersten Zahnrad handelt es sich um ein Losrad der sechsten Welle, während es sich bei dem zweiten Zahnrad um ein Festrad der sechsten Welle handelt. Alternativ handelt es sich bei dem ersten Zahnrad um das Festrad der sechsten Welle, während es sich bei dem zweiten Zahnrad um das Losrad der sechsten Welle handelt.

Ein Losrad einer Welle ist ein Zahnrad, das drehbar auf der Welle gelagert ist. Die Welle und das Losrad sind relativ zueinander verdrehbar. Eine Drehachse des Zahnrads und eine Drehachse der Welle sind dabei identisch. Bevorzugt verläuft die Welle durch das Losrad hindurch.

Über das neunte Schaltelement sind das Losrad der sechsten Welle und die sechste Welle drehfest miteinander verbindbar. Auf diese Weise lässt sich ein zusätzlicher Gang realisieren, dessen Drehmomentfluss ausgehend von der ersten Welle über die zweite Welle, von dort über die sechste Welle zur ersten Welle und weiter über die vierte Welle zu dem Abtrieb verläuft. Zwar beansprucht die sechste Welle in radialer Richtung Bauraum, die Abmessungen des Getriebes in axialer Richtung bleiben aber unverändert. Das erfindungsgemäße Getriebe lässt sich daher in axialer Richtung besonders bauraumsparend realisieren. Das Getriebe ist daher besonders geeignet zur Verwendung in einem Kraftfahrzeug in Front-Queranordnung.

Das Getriebe ist derart weitergebildet, dass ein Festrad der zweiten Welle und das erste Zahnrad der sechsten Welle miteinander kämmen; wobei das Festrad der zweiten Welle mit einem ersten Losrad der vierten Welle und mit einem ersten Losrad der fünften Welle drehwirksam verbunden ist; wobei über das dritte Schaltelement das erste Losrad der vierten Welle und die vierte Welle drehfest miteinander verbindbar sind; und wobei über das sechste Schaltelement das erste Losrad der fünften Welle und die fünfte Welle drehfest miteinander verbindbar sind. In einer Ausführungsform ist das Getriebe derart weitergebildet, dass ein erstes Festrad der dritten Welle und ein zweites Losrad der vierten Welle drehwirksam miteinander verbunden sind; wobei über das vierte Schaltelement das zweite Losrad der vierten Welle und die vierte Welle drehfest miteinander verbindbar sind; wobei das zweite Losrad der vierten Welle und ein zweites Losrad der fünften Welle drehwirksam miteinander verbunden sind; wobei über das siebte Schaltelement das zweite Losrad der fünften Welle und die fünfte Welle drehfest verbindbar sind; wobei ein zweites Festrad der dritten Welle mit einem dritten Losrad der vierten Welle und mit einem dritten Losrad der fünften Welle drehwirksam verbunden ist; wobei über das fünfte Schaltelement das dritte Losrad der vierten Welle und die vierte Welle drehfest miteinander verbindbar sind; wobei über das achte Schaltelement das dritte Losrad der fünften Welle und die fünfte Welle drehfest miteinander verbindbar sind; und wobei das zweite Zahnrad der sechsten Welle mit dem ersten Festrad, mit dem zweiten Festrad oder mit einem dritten Festrad der dritten Festrad der fünften Welle kämmt.

Ein erfindungsgemäßes Verfahren zum Schalten des oben beschriebenen Getriebes sieht vor, dass ein erster Gang durch Schließen des zweiten Schaltelements, des neunten Schaltelements und des vierten Schaltelements realisiert wird; wobei ein zweiter Gang durch Schließen des ersten Schaltelements und des vierten Schaltelements realisiert wird; wobei ein dritter Gang durch Schließen des zweiten Schaltelements und des sechsten Schaltelements realisiert wird; wobei ein vierter Gang durch Schließen des ersten Schaltelements und des achten Schaltelements realisiert wird; wobei ein fünfter Gang durch Schließen des zweiten Schaltelements und des dritten Schaltelements realisiert wird; und wobei ein sechster Gang durch Schließen des ersten Schaltelements und des fünften Schaltelements realisiert wird.

Mittels der sechsten Welle lässt sich auch ein erster Rückwärtsgang realisieren, dessen Drehmomentfluss ausgehend von der ersten Welle über die zweite Welle, von dort über die sechste Welle auf die dritte Welle und von dort über die vierte Welle zu dem Abtrieb verläuft. Dazu werden das zweite Schaltelement, das vierte Schaltelement, das siebte Schaltelement und das neunte Schaltelement geschlossen.

Ein zweiter Rückwärtsgang lässt sich durch Schließen des ersten Schaltelements, des vierten Schaltelements und des siebten Schaltelements realisieren.

Darüber hinaus ist es möglich, einen siebten Gang zu schalten. Dieser wird durch Schließen des ersten Schaltelements, Schließen des neunten Schaltelements und Schließen des dritten Schaltelements realisiert. Ein Drehmomentfluss des siebten Gangs verläuft ausgehend von der ersten Welle über die dritte Welle, von dort über die sechste Welle zu der zweiten Welle und von dort über die vierte Welle zu dem Abtrieb.

Die Schaltelemente, die gemäß obiger Beschreibung für den jeweiligen Gang nicht geschlossen sein müssen, sind bevorzugt geöffnet. Durch Schließen eines oder mehrerer der Schaltelemente 3 bis 9 lässt sich ein Gang vorwählen. Indem je nach eingelegtem Gang das erste Schaltelement geöffnet und das zweite Schaltelement geschlossen oder das erste Schaltelement geschlossen und das zweite Schaltelement geöffnet wird, lässt sich das Getriebe in den vorgewählten Gang umschalten. So ist es möglich, wenn der erste Gang eingelegt ist, den zweiten Gang vorzuwählen. Ist der zweite Gang eingelegt, lassen sich der ersten Gang, der dritte Gang oder der fünfte Gang vorwählen. Ist der dritte Gang eingelegt, lassen sich der zweite Rückwärtsgang, der zweite Gang, der vierte Gang oder der sechste Gang vorwählen. Ist der vierte Gang eingelegt, lassen sich der dritte oder der fünfte Gang vorwählen. Ist der fünfte Gang eingelegt, lassen sich der zweite Rückwärtsgang, der zweite Gang, der vierte Gang, der sechste Gang oder der siebte Gang vorwählen. Ist der sechste Gang eingelegt, lassen sich der dritte Gang oder der fünfte Gang vorwählen. Ist der siebte Gang eingelegt, lässt sich der fünfte Gang vorwählen. Bei eingelegtem ersten Rückwärtsgang ist kein anderer Gang vorwählbar. Ist der zweite Rückwärtsgang eingelegt, lassen sich der erste Rückwärtsgang, der dritte Gang oder der fünfte Gang vorwählen.

Bevorzugte Ausführungsbeispiele der Erfindung sind in den Figuren dargestellt. Übereinstimmende Bezugsziffern kennzeichnen dabei gleiche oder funktionsgleiche Merkmale. Im Einzelnen zeigt:
- Fig. 1: einen ersten Radsatz; und
- Fig. 2: einen zweiten Radsatz.

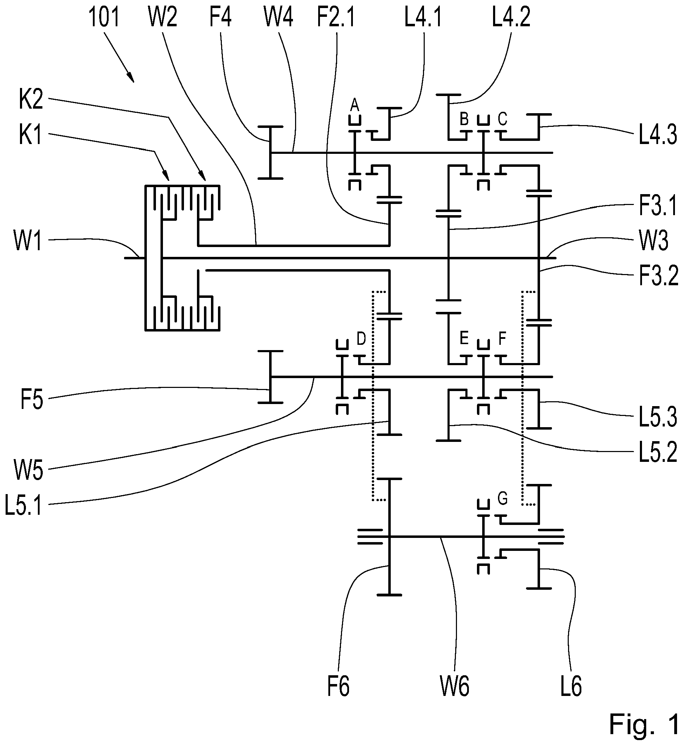

Der in Fig. 1 dargestellte erste Radsatz 101 umfasst insgesamt sechs Wellen - eine erste Welle W1, eine zweite Welle W2, eine dritte Welle W3, eine vierte Welle W4, eine fünfte Welle W5 und eine sechste Welle W6. Insgesamt neun Schaltelemente - ein erstes Schaltelement K1, ein zweites Schaltelement K2, ein drittes Schaltelement A, ein viertes Schaltelement B, ein fünftes Schaltelement C, ein sechstes Schaltelement D, ein siebtes Schaltelement E, ein achtes Schaltelement F und ein neuntes Schaltelement G - sind in dem Radsatz 101 vorgesehen.

Die erste Welle W1, die zweite Welle W2 und die dritte Welle W3 sind koaxial zueinander angeordnet. Das erste Schaltelement K1 verbindet im geschlossenen Zustand die erste Welle W1 und die dritte Welle W3 drehfest miteinander. Das zweite Schaltelement K2 stellt im geschlossenen Zustand eine drehfeste Verbindung zwischen der ersten Welle W1 und der zweiten Welle W2 her. Die zweite Welle W2 ist als Hohlwelle ausgebildet, durch welche die dritte Welle W3 hindurch verläuft.

Das erste Schaltelement K1 und das zweite Schaltelement K2 dienen als Anfahrkupplungen und sind entsprechend reibschlüssig ausgebildet. Beide Schaltelemente K1, K2 sind in einem gemeinsamen Gehäuse integriert. Es handelt sich also um eine Doppelkupplung.

Die zweite Welle W2 weist ein zweites Festrad F2 auf. Die dritte Welle W3 weist ein erstes Festrad F3.1 und ein zweites Festrad F3.2 auf. Die Anordnung dieser drei Festräder in axialer Richtung, im Folgenden axiale Referenzrichtung genannt, gestaltet sich wie folgt: Festrad F2 der zweiten Welle W2, erstes Festrad F3.1 der dritten Welle W3 und zweites Festrad F3.2 der dritten Welle W3.

Die vierte Welle W4 weist ein Festrad F4, ein erstes Losrad L4.1, ein zweites Losrad L4.2 und ein drittes Losrad L4.3 auf. Das erste Losrad L4.1 der vierten Welle kämmt mit dem Festrad F2 der zweiten Welle, das zweite Losrad L4.2 der vierten Welle W4 mit dem ersten Festrad F3.1 der dritten Welle W3 und das dritte Losrad L4.3 der vierten Welle W4 mit dem zweiten Festrad F3.2 der dritten Welle W3. Entsprechend ist die vierte Welle W4 achsversetzt zu der ersten Welle W1, der zweiten Welle W2 und der dritten Welle W3 angeordnet. Das dritte Schaltelement A stellt im geschlossenen Zustand eine drehfeste Verbindung zwischen dem ersten Losrad L4.1 der vierten Welle W4 und der vierten Welle W4 her. Das vierte Schaltelement B verbindet im geschlossenen Zustand das zweite Losrad L4.2 der vierten Welle W4 und die vierte Welle W4 miteinander. Eine drehfeste Verbindung zwischen dem dritten Losrad L4.3 der vierten Welle W4 und der vierten Welle W4 wird durch das fünfte Schaltelement C im geschlossenen Zustand hergestellt.

In der axialen Referenzrichtung sind die Zahnräder der vierten Welle W4 wie folgt angeordnet: Festrad F4, erstes Losrad L4.1, zweites Losrad L4.2 und drittes Losrad L4.3.

Die fünfte Welle W5 weist ein Festrad F5, ein erstes Losrad L5.1, ein zweites Losrad L5.2 und ein drittes Losrad L5.3 auf. Das erste Losrad L5.1 der fünften Welle W5 kämmt mit dem Festrad F2 der zweiten Welle W2, das zweite Losrad L5.2 der fünften Welle W5 mit dem zweiten Losrad L4.2 der vierten Welle W4 und das dritte Losrad L5.3 der fünften Welle W5 mit dem zweiten Festrad F3.2 der dritten Welle W3. Daraus ergibt sich bezüglich der axialen Referenzrichtung folgende Reihenfolge der Zahnräder der fünften Welle W5: Festrad F5, erstes Losrad L5.1, zweites Losrad L5.2 und drittes Losrad L5.3. Weiterhin ist die fünfte Welle W5 achsversetzt zu der ersten Welle W1, der zweiten Welle W2 und der dritten Welle W3 angeordnet. Weiterhin sind die fünfte Welle W5 und die vierte Welle W4 achsversetzt zueinander angeordnet.

Im geschlossenen Zustand stellt das sechste Schaltelement D eine drehfeste Verbindung zwischen dem ersten Losrad L5.1 der fünften Welle und der fünften Welle her. Eine drehfeste Verbindung zwischen dem zweiten Losrad L5.2 der fünften Welle W5 und der fünften Welle W5 stellt das siebte Schaltelement E im geschlossenen Zustand her. Befindet sich das achte Schaltelement F im geschlossenen Zustand, stellt es eine drehfeste Verbindung zwischen dem dritten Losrad L5.3 der fünften Welle W5 und der fünften Welle W5 her.

Die sechste Welle W6 weist ein Festrad F6 und ein Losrad L6 auf. Das Festrad F6 der sechsten Welle kämmt mit dem Festrad F2 der zweiten Welle W2. Das Losrad L6 der sechsten Welle W6 kämmt mit dem weiten Festrad F3.2 der dritten Welle W3. Entsprechend ist das Losrad L6 der sechsten Welle W6 in axialer Referenzrichtung auf das Festrad F6 der sechsten Welle W6 folgend angeordnet

Es lassen sich alternative Ausführungsbeispiele realisieren, bei denen das Losrad L6 mit dem ersten Festrad F3.1 der dritten Welle W3 oder mit einem dritten Festrad der dritten Welle W3 kämmt. Auch ist es möglich, das Festrad F6 und das Losrad L6 der sechsten Welle W6 zu vertauschen, sodass das Losrad L6 der sechsten Welle W6 mit dem Festrad F2 der zweiten Welle W2 kämmt, während das Festrad F6 der sechsten Welle W6 mit einem der Festräder der dritten Welle W3 kämmt. Entsprechend ist das Festrad F6 der sechsten Welle W6 in axialer Referenzrichtung vor dem Losrad L6 der sechsten Welle W6 angeordnet

Ein Abtrieb des ersten Radsatzes 101 ist in Fig. 1 nicht dargestellt. Mit einer Verzahnung des Abtriebs kämmen das Festrad F4 der vierten Welle W4 und das Festrad F5 der fünften Welle W5.

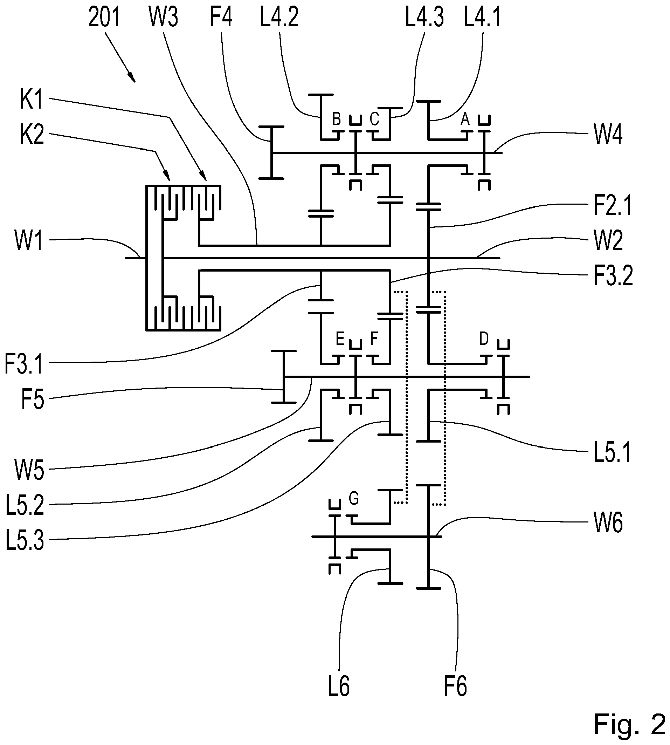

Der in Fig. 2 dargestellte zweite Radsatz 201 weist die gleichen Komponenten wie der erste Radsatz 101 auf. Die funktionalen Zusammenhänge der einzelnen Komponenten sind dieselben. Insbesondere kämmen entsprechende Zahnräder miteinander. Auch die Wirkung der einzelnen Schaltelemente bleibt unverändert. Geändert wurde hingegen die Ausgestaltung und Anordnung der zweiten Welle W2 und der dritten Welle W3. So ist die dritte Welle W3 des zweiten Radsatz 201 als Hohlwelle ausgestaltet, während die zweite Welle W2 durch die dritte Welle W3 hindurch verläuft. Dadurch ergibt sich eine abweichende axiale Anordnung der Zahnräder. So sind die Zahnräder der zweiten Welle W2 und der dritten Welle W3 bezüglich der axialen Referenzrichtung wie folgt angeordnet: erstes Festrad F3.1 der dritten Welle W3, zweites Festrad F3.2 der dritten Welle W3 und Festrad F2 der zweiten Welle W2. Die Zahnräder der dritten Welle W3 sind bezüglich der axialen Referenzrichtung wie folgt angeordnet: Festrad F4, zweites Losrad L4.2, drittes Losrad L4.3 und erstes Losrad L4.1. Die Zahnräder der fünften Welle sind bezüglich der axialen Referenzrichtung wie folgt angeordnet: Festrad F5, zweites Losrad L5.2, drittes Losrad L5.3, erstes Losrad L5.1. Entsprechend ist das Festrad F6 der sechsten Welle W6 in axialer Referenzrichtung hinter dem Losrad L6 der sechsten Welle W6 angeordnet.

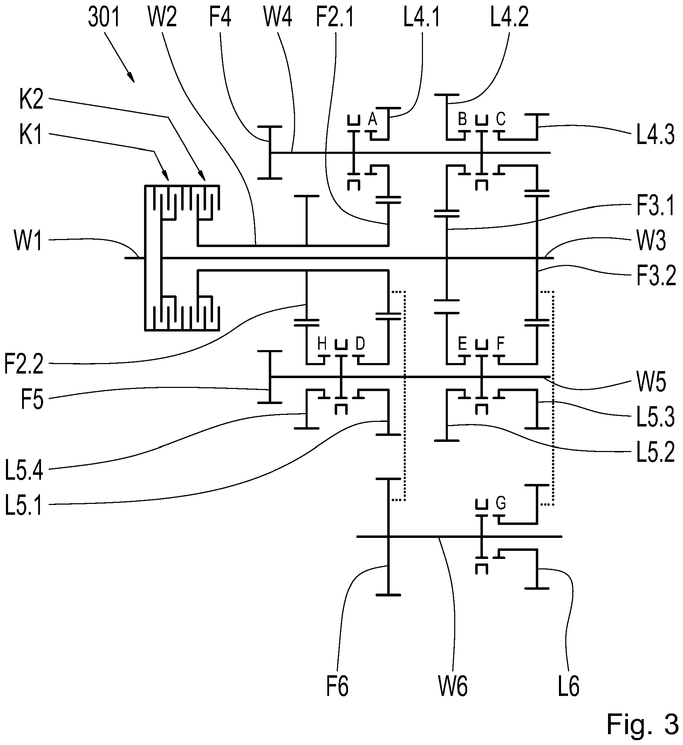

Bei dem in Fig. 3 dargestellten dritten Radsatz 301 handelt es sich um den ersten Radsatz 101, bei dem die zweite Welle W2 um ein zweites Festrad F2.2 und die fünfte Welle W5 um ein viertes Losrad L5.4 ergänzt wurden. Weiterhin weist der dritte Radsatz 301 ein zehntes Schaltelement H auf. In geschlossenem Zustand verbindet das zehnte Schaltelement H das vierte Losrad L5.4 der fünften Welle W5 drehfest mit der fünften Welle W5. Das zweite Festrad F2.2 der zweiten Welle W2 und das vierte Losrad L5.4 der fünften Welle W5 kämmen miteinander.

### Bezugszeichen

- 101: erster Radsatz
- 103: zweiter Radsatz
- K1: erstes Schaltelement
- K2: zweites Schaltelement
- A: drittes Schaltelement
- B: viertes Schaltelement
- C: fünftes Schaltelement
- D: sechstes Schaltelement
- E: siebtes Schaltelement
- F: achtes Schaltelement
- G: neuntes Schaltelement
- W1: erste Welle
- W2: zweite Welle
- F2: Festrad der zweiten Welle
- W3: dritte Welle
- F3.1: erstes Festrad der dritten Welle
- F3.2: zweites Festrad der dritten Welle
- W4: vierte Welle
- F4: Festrad der vierten Welle
- L4.1: erstes Losrad der vierten Welle
- L4.2: zweites Losrad der vierten Welle
- L4.3: drittes Losrad der vierten Welle
- W5: fünfte Welle
- F5: Festrad der fünften Welle
- L5.1: erstes Losrad der fünften Welle
- L5.2: zweites Losrad der fünften Welle
- L5.3: drittes Losrad der fünften Welle
- W6: sechste Welle
- F6: Festrad der sechsten Welle
- L6: Losrad der sechsten Welle

## Patentansprüche

1. Getriebe (101, 201, 301) mit einer ersten Welle (W1), einer zweiten Welle (W2), einer dritten Welle (W3), einer vierten Welle (W4), einer fünften Welle (W5), einer sechsten Welle (W6), einem ersten Schaltelement (K1), einem zweiten Schaltelement (K2), einem dritten Schaltelement (A), einem vierten Schaltelement (B), einem fünften Schaltelement (C), einem sechsten Schaltelement (D), einem siebten Schaltelement (E), einem achten Schaltelement (F), einem neunten Schaltelement (G) und einem Abtrieb; wobei über das erste Schaltelement (K1) die erste Welle (W1) und die dritte Welle (W3) drehfest miteinander verbindbar sind; wobei über das zweite Schaltelement (K2) die erste Welle (W1) und die zweite Welle (W2) drehfest miteinander verbindbar sind; wobei über das dritte Schaltelement (A) die zweite Welle (W2) und die vierte Welle (W4) drehwirksam miteinander verbindbar sind; wobei über das vierte Schaltelement (B) und das fünfte Schaltelement (C) jeweils die dritte Welle (W3) und die vierte Welle (W4) drehfest miteinander verbindbar sind; wobei über das sechste Schaltelement (D) die zweite Welle (W2) und die fünfte Welle (W5) drehwirksam miteinander verbindbar sind; wobei über das siebte Schaltelement (E) die vierte Welle (W4) und die fünfte Welle (W5) drehwirksam miteinander verbindbar sind; wobei über das das achte Schaltelement (F) die dritte Welle (W3) und die fünfte Welle (W5) drehwirksam miteinander verbindbar sind; wobei ein Festrad (F4) der vierten Welle (W4) und ein Festrad (F5) der fünften Welle (W5) jeweils drehwirksam mit dem Abtrieb verbunden sind; wobei ein erstes Zahnrad der sechsten Welle (W6) und ein Festrad der zweiten Welle (W2) miteinander kämmen; wobei ein zweites Zahnrad der sechsten Welle (W6) und einem Festrad der dritten Welle (W3) miteinander kämmen; wobei es sich bei dem ersten Zahnrad um ein Losrad (L6) der sechsten Welle (W6) und bei dem zweiten Zahnrad um ein Festrad (F6) der sechsten Welle (W6) handelt, oder es sich bei dem ersten Zahnrad um das Festrad (F6) der sechsten Welle (W6) und bei dem zweiten Zahnrad um das Losrad (L6) der sechsten Welle (W6) handelt; und wobei über das neunte Schaltelement (G) das Losrad (L6) der sechsten Welle (W6) und die sechste Welle (W6) drehfest miteinander verbindbar sind, **dadurch gekennzeichnet, dass** ein Festrad (F2) der zweiten Welle (W2) und das erste Zahnrad der sechsten Welle (W6) miteinander kämmen; das Festrad (F2) der zweiten Welle (W2) mit einem ersten Losrad (L4.1) der vierten Welle (W4) und mit einem ersten Losrad (L5.1) der fünften Welle (W5) drehwirksam verbunden ist; über das dritte Schaltelement (A) das erste Losrad (L4.1) der vierten Welle (W4) und die vierte Welle (W4) drehfest miteinander verbindbar sind; und über das sechste Schaltelement (D) das erste Losrad (L5.1) der fünften Welle (W5) und die fünfte Welle (W5) drehfest miteinander verbindbar sind.

2. Getriebe (101, 102, 301) nach Anspruch 1; **dadurch gekennzeichnet, dass** ein erstes Festrad (F3.1) der dritten Welle (W3) und ein zweites Losrad (L4.2) der vierten Welle (W4) drehwirksam miteinander verbunden sind; wobei
über das vierte Schaltelement (B) das zweite Losrad (L4.2) der vierten Welle (W4) und die vierte Welle (W4) drehfest miteinander verbindbar sind; wobei
das zweite Losrad (L4.2) der vierten Welle (W4) und ein zweites Losrad (L5.2) der fünften Welle (W5) drehwirksam miteinander verbunden sind; wobei
über das siebte Schaltelement (E) das zweite Losrad (L5.2) der fünften Welle (W5) und die fünfte Welle (W5) drehfest verbindbar sind; wobei
ein zweites Festrad (F3.2) der dritten Welle (W3) mit einem dritten Losrad (L4.3) der vierten Welle (W4) und mit einem dritten Losrad (L5.3) der fünften Welle (W5) drehwirksam verbunden ist; wobei
über das fünfte Schaltelement (C) das dritte Losrad (L4.3) der vierten Welle (W4) und die vierte Welle (W4) drehfest miteinander verbindbar sind; wobei
über das achte Schaltelement (F) das dritte Losrad (L5.3) der fünften Welle (W5) und die fünfte Welle (W5) drehfest miteinander verbindbar sind; und wobei
das zweite Zahnrad der sechsten Welle (W6) mit dem ersten Festrad (F5.1), mit dem zweiten Festrad (F5.2) oder mit einem dritten Festrad der dritten Festrad der fünften Welle (W5) kämmt.

3. Verfahren zum Schalten eines Getriebes (101, 201, 301) nach einem der vorhergehenden Ansprüche; **dadurch gekennzeichnet, dass**
ein erster Gang durch Schließen des zweiten Schaltelements (K2), des neunten Schaltelements (G) und des vierten Schaltelements (B) realisiert wird; wobei
ein zweiter Gang durch Schließen des ersten Schaltelements (K1) und des vierten Schaltelements (B) realisiert wird; wobei
ein dritter Gang durch Schließen des zweiten Schaltelements (K2) und des sechsten Schaltelements (D) realisiert wird; wobei
ein vierter Gang durch Schließen des ersten Schaltelements (K1) und des achten Schaltelements (F) realisiert wird; wobei
ein fünfter Gang durch Schließen des zweiten Schaltelements (K2) und des dritten Schaltelements (A) realisiert wird; und wobei
ein sechster Gang durch Schließen des ersten Schaltelements (K1) und des fünften Schaltelements (C) realisiert wird.

4. Verfahren nach dem vorhergehenden Anspruch; **dadurch gekennzeichnet, dass** ein Rückwärtsgang durch Schließen des zweiten Schaltelements (K2), des vierten Schaltelements (B), des siebten Schaltelements (E) und des neunten Schaltelements (G) realisiert wird.

5. Verfahren nach einem der vorhergehenden Verfahrensansprüche; **dadurch gekennzeichnet, dass**
ein Rückwärtsgang durch Schließen des ersten Schaltelements (K1), des vierten Schaltelements (B) und des siebten Schaltelements (E) realisiert wird.

## Claims

1. Transmission (101, 201, 301) with a first shaft (W1), a second shaft (W2), a third shaft (W3), a fourth shaft (W4), a fifth shaft (W5), a sixth shaft (W6), a first shifting element (K1), a second shifting element (K2), a third shifting element (A), a fourth shifting element (B), a fifth shifting element (C), a sixth shifting element (D), a seventh shifting element (E), an eighth shifting element (F), a ninth shifting element (G) and an output; wherein the first shaft (W1) and the third shaft (W3) are connectable to each other for conjoint rotation via the first shifting element (K1); wherein the first shaft (W1) and the second shaft (W2) are connectable to each other for conjoint rotation via the second shifting element (K2); wherein the second shaft (W2) and the fourth shaft (W4) are connectable to each other for a rotational action via the third shifting element (A); wherein the third shaft (W3) and the fourth shaft (W4) are in each case connectable to each other for conjoint rotation via the fourth shifting element (B) and the fifth shifting element (C); wherein the second shaft (W2) and the fifth shaft (W5) are connectable to each other for a rotational action via the sixth shifting element (D); wherein the fourth shaft (W4) and the fifth shaft (W5) are connectable to each other for a rotational action via the seventh shifting element (E); wherein the third shaft (W3) and the fifth shaft (W5) are connectable to each other for a rotational action via the eighth shifting element (F); wherein a fixed gear (F4) of the fourth shaft (W4) and a fixed gear (F5) of the fifth shaft (W5) are each connected to the output for a rotational action; wherein a first gearwheel of the sixth shaft (W6) and a fixed gear of the second shaft (W2) intermesh; wherein a second gearwheel of the sixth shaft (W6) and a fixed gear of the third shaft (W3) intermesh; wherein the first gearwheel is a free gear (L6) of the sixth shaft (W6) and the second gearwheel is a fixed gear (F6) of the sixth shaft (W6), or
the first gearwheel is the fixed gear (F6) of the sixth shaft (W6) and the second gearwheel is the free gear (L6) of the sixth shaft (W6); and wherein the free gear (L6) of the sixth shaft (W6) and the sixth shaft (W6) are connectable to each other for conjoint rotation via the ninth shifting element (G), **characterized in that** a fixed gear (F2) of the second shaft (W2) and the first gearwheel of the sixth shaft (W6) intermesh; the fixed gear (F2) of the second shaft (W2) is connected for a rotational action to a first free gear (L4.1) of the fourth shaft (W4) and to a first free gear (L5.1) of the fifth shaft (W5); the first free gear (L4.1) of the fourth shaft (W4) and the fourth shaft (W4) are connectable to each other for conjoint rotation via the third shifting element (A); and the first free gear (L5.1) of the fifth shaft (W5) and the fifth shaft (W5) are connectable to each other for conjoint rotation via the sixth shifting element (D).

2. Transmission (101, 102, 301) according to Claim 1; **characterized in that** a first fixed gear (F3.1) of the third shaft (W3) and a second free gear (L4.2) of the fourth shaft (W4) are connected to each other for a rotational action; wherein
the second free gear (L4.2) of the fourth shaft (W4) and the fourth shaft (W4) are connectable to each other for conjoint rotation via the fourth shifting element (B); wherein
the second free gear (L4.2) of the fourth shaft (W4) and a second free gear (L5.2) of the fifth shaft (W5) are connected to each other for a rotational action; wherein the second free gear (L5.2) of the fifth shaft (W5) and the fifth shaft (W5) are connectable for conjoint rotation via the seventh shifting element (E); wherein
a second fixed gear (F3.2) of the third shaft (W3) is connected for a rotational action to a third free gear (L4.3) of the fourth shaft (W4) and to a third free gear (L5.3) of the fifth shaft (W5); wherein
the third free gear (L4.3) of the fourth shaft (W4) and the fourth shaft (W4) are connectable to each other for conjoint rotation via the fifth shifting element (C); wherein
the third free gear (L5.3) of the fifth shaft (W5) and the fifth shaft (W5) are connectable to each other for conjoint rotation via the eighth shifting element (F); and wherein
the second gearwheel of the sixth shaft (W6) meshes with the first fixed gear (F5.1), with the second fixed gear (F5.2) or with a third fixed gear of the third fixed gear of the fifth shaft (W5).

3. Method for shifting a transmission (101, 201, 301) according to either of the preceding claims; **characterized in that**
a first gear is realized by closing the second shifting element (K2), the ninth shifting element (G) and the fourth shifting element (B); wherein
a second gear is realized by closing the first shifting element (K1) and the fourth shifting element (B); wherein a third gear is realized by closing the second shifting element (K2) and the sixth shifting element (D); wherein a fourth gear is realized by closing the first shifting element (K1) and the eighth shifting element (F); wherein a fifth gear is realized by closing the second shifting element (K2) and the third shifting element (A); and wherein
a sixth gear is realized by closing the first shifting element (K1) and the fifth shifting element (C).

4. Method according to the preceding claim; **characterized in that** a reverse gear is realized by closing the second shifting element (K2), the fourth shifting element (B), the seventh shifting element (E) and the ninth shifting element (G).

5. Method according to one of the preceding method claims; **characterized in that**
a reverse gear is realized by closing the first shifting element (K1), the fourth shifting element (B) and the seventh shifting element (E).

## Revendications

1. Transmission (101, 201, 301) comportant un premier arbre (W1), un deuxième arbre (W2), un troisième arbre (W3), un quatrième arbre (W4), un cinquième arbre (W5), un sixième arbre (W6), un premier élément de changement de vitesse (K1), un deuxième élément de changement de vitesse (K2), un troisième élément de changement de vitesse (A), un quatrième élément de changement de vitesse (B), un cinquième élément de changement de vitesse (C), un sixième élément de changement de vitesse (D), un septième élément de changement de vitesse (E), un huitième élément de changement de vitesse (F), un neuvième élément de changement de vitesse (G) et une sortie ; le premier arbre (W1) et le troisième arbre (W3) pouvant être reliés l'un à l'autre de manière solidaire en rotation par le biais du premier élément de changement de vitesse (K1) ; le premier arbre (W1) et le deuxième arbre (W2) pouvant être reliés l'un à l'autre de manière solidaire en rotation par le biais du deuxième élément de changement de vitesse (K2) ; le deuxième arbre (W2) et le quatrième arbre (W4) pouvant être reliés en rotation l'un à l'autre par le biais du troisième élément de changement de vitesse (A) ; le troisième arbre (W3) et le quatrième arbre (W4) pouvant être reliés respectivement l'un à l'autre de manière solidaire en rotation par le biais du quatrième élément de changement de vitesse (B) et du cinquième élément de changement de vitesse (C) ; le deuxième arbre (W2) et le cinquième arbre (W5) pouvant être reliés en rotation l'un à l'autre par le biais du sixième élément de changement de vitesse (D) ; le quatrième arbre (W4) et le cinquième arbre (W5) pouvant être reliés en rotation l'un à l'autre par le biais du septième élément de changement de vitesse (E) ; le troisième arbre (W3) et le cinquième arbre (W5) pouvant être reliés en rotation l'un à l'autre par le biais du huitième élément de changement de vitesse (F) ; une roue fixe (F4) du quatrième arbre (W4) et une roue fixe (F5) du cinquième arbre (W5) étant respectivement reliées en rotation à la sortie ; une première roue dentée du sixième arbre (W6) et une roue fixe du deuxième arbre (W2) s'engrenant l'une avec l'autre ; une deuxième roue dentée du sixième arbre (W6) et une roue fixe du troisième arbre (W3) s'engrenant l'une avec l'autre ; la première roue dentée étant une roue folle (L6) du sixième arbre (W6) et la deuxième roue dentée étant une roue fixe (F6) du sixième arbre (W6), ou
la première roue dentée étant la roue fixe (F6) du sixième arbre (W6) et la deuxième roue dentée étant la roue folle (L6) du sixième arbre (W6) ; et la roue folle (L6) du sixième arbre (W6) et le sixième arbre (W6) pouvant être reliés l'un à l'autre de manière solidaire en rotation par le biais du neuvième élément de changement de vitesse (G), **caractérisée en ce qu'**une roue fixe (F2) du deuxième arbre (W2) et la première roue dentée du sixième arbre (W6) s'engrènent l'une avec l'autre ; la roue fixe (F2) du deuxième arbre (W2) est reliée en rotation à une première roue folle (L4.1) du quatrième arbre (W4) et à une première roue folle (L5.1) du cinquième arbre (W5) ; la première roue folle (L4.1) du quatrième arbre (W4) et le quatrième arbre (W4) peuvent être reliés l'un à l'autre de manière solidaire en rotation par le biais du troisième élément de changement de vitesse (A) ; et la première roue folle (L5.1) du cinquième arbre (W5) et le cinquième arbre (W5) peuvent être reliés l'un à l'autre de manière solidaire en rotation par le biais du sixième élément de changement de vitesse (D).

2. Transmission (101, 102, 301) selon la revendication 1 ; **caractérisée en ce qu'**une première roue fixe (F3.1) du troisième arbre (W3) et une deuxième roue folle (L4.2) du quatrième arbre (W4) sont reliées en rotation l'une à l'autre ;
la deuxième roue folle (L4.2) du quatrième arbre (W4) et le quatrième arbre (W4) pouvant être reliés l'un à l'autre de manière solidaire en rotation par le biais du quatrième élément de changement de vitesse (B) ;
la deuxième roue folle (L4.2) du quatrième arbre (W4) et une deuxième roue folle (L5.2) du cinquième arbre (W5) étant reliées en rotation l'une à l'autre ;
la deuxième roue folle (L5.2) du cinquième arbre (W5) et le cinquième arbre (W5) pouvant être reliés l'un à l'autre de manière solidaire en rotation par le biais du septième élément de changement de vitesse (E) ;
une deuxième roue fixe (F3.2) du troisième arbre (W3) étant reliée en rotation à une troisième roue folle (L4.3) du quatrième arbre (W4) et à une troisième roue folle (L5.3) du cinquième arbre (W5) ;
la troisième roue folle (L4.3) du quatrième arbre (W4) et le quatrième arbre (W4) pouvant être reliés l'un à l'autre de manière solidaire en rotation par le biais du cinquième élément de changement de vitesse (C) ;
la troisième roue folle (L5.3) du cinquième arbre (W5) et le cinquième arbre (W5) pouvant être reliés l'un à l'autre de manière solidaire en rotation par le biais du huitième élément de changement de vitesse (F) ; et
la deuxième roue dentée du sixième arbre (W6) s'engrenant avec la première roue fixe (F5.1), avec la deuxième roue fixe (F5.2) ou avec une troisième roue fixe de la troisième roue fixe du cinquième arbre (W5).

3. Procédé de changement de vitesse d'une transmission (101, 201, 301) selon l'une des revendications précédentes ; **caractérisé en ce**
**qu'**une première vitesse est réalisée par fermeture du deuxième élément de changement de vitesse (K2), du neuvième élément de changement de vitesse (G) et du quatrième élément de changement de vitesse (B) ;
une deuxième vitesse étant réalisée par fermeture du premier élément de changement de vitesse (K1) et du quatrième élément de changement de vitesse (B) ;
une troisième vitesse étant réalisée par fermeture du deuxième élément de changement de vitesse (K2) et du sixième élément de changement de vitesse (D) ;
une quatrième vitesse étant réalisée par fermeture du premier élément de changement de vitesse (K1) et du huitième élément de changement de vitesse (F) ;
une cinquième vitesse étant réalisée par fermeture du deuxième élément de changement de vitesse (K2) et du troisième élément de changement de vitesse (A) ; et
une sixième vitesse étant réalisée par fermeture du premier élément de changement de vitesse (K1) et du cinquième élément de changement de vitesse (C).

4. Procédé selon la revendication précédente ; **caractérisé en ce**
**qu'**une marche arrière est réalisée par fermeture du deuxième élément de changement de vitesse (K2), du quatrième élément de changement de vitesse (B), du septième élément de changement de vitesse (E) et du neuvième élément de changement de vitesse (G).

5. Procédé selon l'une des revendications précédentes ; **caractérisé en ce**
**qu'**une marche arrière est réalisée par fermeture du premier élément de changement de vitesse (K1), du quatrième élément de changement de vitesse (B) et du septième élément de changement de vitesse (E).
